Europäisches Patentamt

European Patent Office

Office européen des brevets

(11) Veröffentlichungsnummer: **0 122 420 B1**

## EUROPÄISCHE PATENTSCHRIFT

(45) Veröffentlichungstag der Patentschrift: **29.07.92**

(51) Int. Cl.5: **G01N 27/28**

(21) Anmeldenummer: **84102278.3**

(22) Anmeldetag: **02.03.84**

(54) **Elektrodenanordnung zur elektrochemischen Analyse elektrolytischer Bestandteile einer Flüssigkeit.**

(30) Priorität: **11.04.83 DE 3312923**

(43) Veröffentlichungstag der Anmeldung:
**24.10.84 Patentblatt 84/43**

(45) Bekanntmachung des Hinweises auf die
Patenterteilung:
**29.07.92 Patentblatt 92/31**

(84) Benannte Vertragsstaaten:
**AT BE CH DE FR GB IT LI LU NL SE**

(56) Entgegenhaltungen:
**EP-A- 0 036 171        EP-A- 0 037 701**
**DE-A- 3 226 620        US-A- 4 171 246**
**US-A- 4 198 281        US-A- 4 342 964**

**RESEARCH DISCLOSURE, Nr. 190, Februar
1980, Seite 71, Nr. 19040; R.A. COLLINS:
"Reference fluid pod in apparatus for determining ionic activity"**

**R.Bock: Methoden der analytischen Chemie,
Basel 1984**

**Holleman-Wiberg Lehrbuch der anorganischen Chemie, 81-90 Auflage, Berlin 1976**

(73) Patentinhaber: **BOEHRINGER MANNHEIM
GMBH
Sandhofer Strasse 116
W-6800 Mannheim 31(DE)**

(72) Erfinder: **Dietze, Werner
Anton-Bartl-Strasse 7
W-8132 Tutzing(DE)**
Erfinder: **Haar, Hans-Peter, Dr.rer.nat.
Starenweg 2
W-8120 Weilheim(DE)**
Erfinder: **Herrmann, Horst
Dorfstrasse 24
W-8139 Bernried(DE)**
Erfinder: **Knoll, Dieter, Dr., Phys
Wendelinsweg 4
W-6242 Kronberg(DE)**
Erfinder: **Reiser, Wolfgang
Bahnhofstrasse 25
W-8124 Seeshaupt(DE)**

EP 0 122 420 B1

## Beschreibung

Die Erfindung betrifft eine einmalverwendbare Elektrodenanordnung zur elektrochemischen Analyse elektrolytischer Bestandteile einer Flüssigkeit, umfassend einen Basiskörper aus Isoliermaterial, wenigstens eine in Phasengrenzkontakt mit der Flüssigkeit bringbar an dem Basiskörper gehaltene für eine zu analysierende Ionenart selektive Meßelektrode, wenigstens eine an dem Basiskörper gehaltene Referenzelektrode mit einem elektronenleitenden Ableitungskontaktelement und einen herstellerseitig vorgepackten Elektrolyt, der die mindestens eine zu analysierende Ionenart enthält.

Mit Hilfe derartiger Elektrodenanordnungen wird in der klinischen Chemie zu diagnostischen Zwecken die Aktivität bzw. Konzentration von Ionen in Körperflüssigkeiten, insbesondere Blut oder Urin,gemessen. Zwischen der Referenzelektrode und der über die Körperflüssigkeit elektrolytisch mit der Referenzelektrode verbundenen ionenselektiven Meßelektrode tritt eine Spannung auf, die ein Maß für die Konzentration der zu analysierenden Ionenart ist und mittels eines hochohmigen Spannungsmeßgeräts gemessen werden kann. Die gemeinsam von der Körperflüssigkeit benetzte Meßelektrode und Referenzelektrode bilden hierbei die beiden Halbzellen einer elektrochemischen Zelle.

Ionenselektive Meßelektroden sind bekannt, beispielsweise aus dem Buch "Working with Ion-Selective Electrodes" von Karl Cammann, Springerverlag, Berlin, 1979, Seiten 49 bis 92. Die ionenselektive Meßelektrode erzeugt ein Halbzellenpotential, welches innerhalb der gewünschten Meßgenauigkeit hinreichend selektiv nur von der zu analysierenden Ionenart in der Flüssigkeit abhängt. Sie können beispielsweise eine mit einem Ableitelektrolyt gefüllte Elektrodenkammer umfassen, die durch eine ionenselektive Membran von der zu analysierenden Körperflüssigkeit getrennt ist. In den Ableitelektrolyt taucht ein Elektronen leitendes Ableitelement ein. Anstelle der Membran können beispielsweise auch selektiv ionenleitende Gläser verwendet werden. Andere bekannte ionenselektive Meßelektroden umfassen Festkörperelektroden, insbesondere aus gepreßtem Pulver oder Einkristallen, die neben Ionenleitfähigkeitseigenschaften auch Elektronenleitfähigkeitseigenschaft haben können.

Referenzelektroden sind ebenfalls bekannt, z.B. aus dem vorstehend erwähnten Buch, Seiten 31 bis 48. Die Referenzelektrode erzeugt ein Halbzellenpotential, welches innerhalb der für die Analyse zur Verfügung stehenden Zeitspanne einen vorgegebenen, möglichst konstanten und von der zu analysierenden Flüssigkeit unabhängigen Wert hat. Das Referenzpotential sollte während 1 Minute nicht mehr als ± 50 $\mu$V schwanken. Sie umfassen ähnlich den Meßelektroden ein Elektronen leitendes Ableitelement, welches in einen Referenzelektrolyt eintaucht. Der Referenzelektrolyt enthält in einer festgelegten Konzentration eine Ionenart, die aufgrund einer reversiblen elektrochemischen Reaktion mit dem Ableitelement ein konstantes Potential erzeugt, unabhängig von der zu analysierenden Flüssigkeit mit der das Referenzelement in elektrolytischem Kontakt steht. Bei dem Reaktionssystem aus Ableitelement und Referenzelektrolyt kann es sich beispielsweise um ein Silber/Silberchloridsystem handeln. Geeignet sind auch Thalliumamalgam/Thallium-I-Chlorid-Systeme. Andere Referenzelektroden basieren auf dem Prinzip ionenselektiver Elektroden, wobei der Referenzelektrolyt die zu analysierende Ionenart in fester Aktivität enthält.

Der Referenzelektrolyt der Referenzelektrode ist im allgemeinen durch Membrane oder sonstige Elektrolytbrücken von dem Meßgut bzw. der zu analysierenden Flüssigkeit separiert, um zumindest während der Meßdauer das zu Konzentrationsänderungen und damit Meßfehlern führende Vermischen zu behindern. Geeignet sind beispielsweise Kapillarkonstruktionen zwischen dem Meßgut und dem Elektrolyten der Referenzelektrode.

Aus der EP-B-10 457 ist eine Elektrodenanordnung bekannt, bei der an einem Isolierkörper im Abstand voneinander zwei über getrennte Beschickungskanäle des Isolierkörpers benetzbare ionenselektive Elektroden angebracht sind. Die Beschickungskanäle sind durch einen quer verlaufenden Kapillarspalt miteinander verbunden. Die mit festen Kontakten versehenen Membranen der ionenselektiven Elektroden, die Beschickungskanäle sowie der die Beschickungskanäle verbindende Kapillarspalt sind symmetrisch zu einer zwischen den Elektroden verlaufenden Symmetrieebene angeordnet. Für die Messung der Ionenaktivität wird der eine Beschickungskanal mit der zu analysierenden Körperflüssigkeit, beispielsweise Blut, beschickt und der andere Beschickungskanal gleichzeitig mit einer Referenzelektrolytflüssigkeit bekannter Ionenaktivität. Die Saugwirkung des Kapillarkanals bewirkt die Elektrolytverbindung zwischen den Elektroden.

Bei der bekannten Elektrodenanordnung handelt es sich um ein nur einmal benutzbares Wegwerfteil. Die Elektroden werden bei Beschickung mit der zu analysierenden Körperflüssigkeit bzw. dem Referenzelektrolyt unmittelbar vor Beginn der Messung erstmals benetzt. Da die Elektroden für die Konditionierung nach dem erstmaligen Benetzen eine gewisse Zeitspanne benötigen und andererseits aufgrund der unmittelbaren Berührung der zu analysierenden Flüssigkeit und des Referenzelektrolyts in dem Kapillarspalt die für die Messung zur Verfügung stehende Zeitspanne begrenzt ist, können im Einzelfall Meßfehler aufgrund des nicht exakt voraussagbaren Grades der Konditionierung der Elektroden auftreten. Da die Saugeigenschaften des Kapillarspalts nach einmaliger Benetzung erschöpft sind, kann keine Kalibriermessung an einem Standardelektrolyten mit bekannter Konzentration der zu analysierenden Ionenart vor der eigentlichen Analysemessung durchgeführt werden.

In der US-A-4 342 964 ist eine Elektrodenanordnung beschrieben, die eine herstellerseitig vorgepackte Elektrolytflüssigkeit enthält. Der Elektrolyt befindet sich in einem gesonderten Behälter, so daß er vor der Benutzung der Elektrodenanordnung nicht in Kontakt mit den Elektroden steht. Die Literaturstelle hat sich zum Ziel gesetzt, daß die Elektrodenanordnung zugleich als Blutsammelgefäß verwendet werden kann. In diesem Zusammenhang dient der vorgepackte Elektrolyt dazu, die Elektrodenanordnung zu kalibrieren und eine Elektrolytbrücke zwischen der Probe und der Referenzelektrode zu bilden. Zu diesem Zweck wird der Elektrolyt durch besondere Maßnahmen unmittelbar vor der analytischen Messung aus dem gesonderten Behälter in die Elektrodenkammer transferiert, wobei er zunächst (während einer Kalibrationsmessung) mit beiden Elektroden und danach (während der Probenmessung) nur noch mit der Referenzelektrode in Kontakt steht.

Aufgabe der vorliegenden Erfindung ist es, eine nach Art eines Wegwerfteils für eine einzige Analysenmessung benutzbare Elektrodenanordnung anzugeben, die einfach in der Handhabung und kostengünstig in der Herstellung ist und zugleich schnell präzise Ergebnisse liefert.

Diese Aufgabe wird durch eine Elektrodenanordnung mit den Merkmalen des Anspruchs 1 gelöst.

Eine derarige Elektrodenanordnung ist nach Art eines Wegwerfartikels lediglich für eine einzige Analysemessung bestimmt. Die Probenkammer wird herstellerseitig mit dem Vorkonditionierungselektrolyt beschickt und verschlossen. Da die Elektroden ständig mit diesem Elektrolyt benetzt sind, sind sie vorkonditioniert, so daß die Elektrodenanordnung augenblicklich einsatzbereit ist. Der zum Vorkonditionieren benutzte Elektrolyt erlaubt vor der eigentlichen Analysemessung die Durchführung einer Eich- bzw. Kalibriermessung z.B. bei noch verschlossenem Hohlraum. Für die Analysemessung wird das Verschlußteil abgenommen und der Vorkonditionierungselektrolyt entfernt, bevor eine Probe der zu analysierenden Flüssigkeit eingebracht wird. Bei dem Vorkonditionierungselektrolyt handelt es sich bevorzugt um eine Flüssigkeit, deren Viskosität durch physikochemische Verfahren stark erhöht sein kann, beispielsweise durch Überführen in Gel-Form, durch Eindicken mit einem $SiO_2$-Eindickungsmittel oder durch Aufnahme in hydrophilen Kunststoffen, wie z.B. Polyvinylalkohol.

Als Referenzelektrolyt der Referenzelektrode wird zweckmäßigerweise eine Lösung verwendet, die die gleichen Ionenarten wie der Vorkonditionierungselektrolyt in der gleichen Aktivität enthält. Dadurch wird erreicht, daß der Diffusionsaustausch der Ionen zwischen dem Referenzelektrolyten und dem in dem Hohlraum befindlichen Vorkonditionierungselektrolyt keine Aktivitätsänderung hervorruft. Dies wäre bei der vorliegenden Erfindung nicht zu tolerieren, weil die als Wegwerfteile ausgebildeten erfindungsgemäßen Elektrodenanordnungen mit dem vorgepackten Vorkonditionierungselektrolyten über lange Zeit gelagert werden müssen.

Besonders bevorzugt sind Referenzelektrolyt und Vorkonditionierungselektrolyt identisch zusammengesetzt. Für diesen Fall werden sie im folgenden auch als Standard-/Referenz-Elektrolyt bezeichnet.

Bei den Meßelektroden sind Konstruktionen bekannt, die ohne einen Ableitelektrolyt auskommen. Besonders bevorzugt sind jedoch die weiter oben erwähnten Meßelektroden mit einem zur Probe hin abgrenzenden Sperrelement, beispielsweise einer ionenselektiven Membran oder einem selektiv ionenleitenden Glas. Um auch in diesem Fall einen Diffusionsaustausch über lange Zeiten zu verhindern, ist bevorzugt der Ableitelektrolyt so zusammengesetzt, daß er diejenigen Ionenarten, für die das Sperrelement durchgängig ist, in der gleichen Aktivität wie der Standardelektrolyt enthält. Auch hier ist besonders bevorzugt der Ableitelektrolyt identisch wie der Referenzelektrolyt und der Vorkonditionierungselektrolyt zusammengesetzt.

Der Vorkonditionierungselektrolyt läßt sich auf vielerlei Weise entfernen. Bei flüssigem Elektrolyt beispielsweise mittels eines an den Hohlraum anschließbaren oder in den Hohlraum eintauchbaren Mundstücks aussaugen oder ausblasen. Soweit der Hohlraum über seine Beschickungsöffnung insgesamt gut zugänglich ist, kann er auch mit einem saugfähigen Materialstück, beispielsweise einem Schwamm oder einem Saugpapierabschnitt, ausgewischt werden.

Um die Handhabung der Elektrodenanordnung zu erleichtern, ist in einer bevorzugten Ausführungsform vorgesehen, daß der Hohlraum ein mit dem Vorkonditionierungselektrolyt getränktes nach Abnehmen des Verschlußteils entfernbares Polster enthält. Der Vorkonditionierungselektrolyt wird nach der Eichmessung zusammen mit dem Polster aus der Probenkammer entnommen.

Da das Polster vielfach sehr kleine Abmessungen hat, ist es zweckmäßigerweise an dem Verschlußteil befestigt. Das Verschlußteil dient als Handhabungsteil des Polsters und erleichtert das Herausnehmen aus einer engen Probenkammer.

Das Polster soll den Vorkonditionierungselektrolyt vollständig mitnehmen. Es besteht deshalb zweckmäßigerweise aus elastischem, saugfähigem Material und ist, gegen seine Elastizität vorgespannt, in dem Hohlraum eingeschlossen. Beim Öffnen des Verschlußteils entspannt sich das Polster und saugt den Standardelektrolyt vollständig auf. Als besonders geeignetes Polstermaterial hat sich Viskoseschwammaterial erwiesen, insbesondere ein Viskose-Schwammtuch, das auch Baumwolle enthält.

Zur Unterbringung des Polsters sind insbesondere als Mulden ausgebildete Probenkammern in dem Basisteil geeignet, wobei die benetzbaren Flächen der Elektroden am Boden der Mulde vorgesehen sind. In der Meßbetriebsstellung weist die Öffnung der Mulde nach oben. Die benetzbaren Flächen der Elektroden und der Boden der Mulde sind vorzugsweise im wesentlichen flach und/oder gehen bündig ineinander über, um das restlose Entfernen des Vorkonditionierungselektrolyt zu erleichtern.

Bei dem Verschlußteil kann es sich um einen auf die Mulde aufsetzbaren Stöpsel oder Deckel handeln. In einer bevorzugten Ausführungsform wird die Mulde durch eine flexible Folie abgedeckt. Geeignet sind beispielsweise Aluminiumfolien, die mit dem Muldenrand lösbar verklebt oder versiegelt sind.

Für die Analyse genügen relativ geringe Flüssigkeitsmengen. Die Elektroden können deshalb auch an der im wesentlichen flachen Oberseite des Basisteils zugänglich sein. Insbesondere in solchen Ausführungsformen kann das mit dem Standardelektrolyt getränkte Polster in einer Mulde des vorzugsweise wieder als flexible Folie aㄨㄤgebildeten Verschlußteils enthalten sein.

Wie bereits eingangs erwähnt, umfaßt die Referenzelektrode im Regelfall ein Elektronen leitendes Ableitkontaktelement und einen Referenzelektrolyt, dessen Viskosität ebenfalls wie die des Vorkonditionierungselektrolyten durch physikochemische Verfahren stark erhöht sein kann. Der Referenzelektrolyt soll innerhalb der für die Analyse zur Verfügung stehenden Zeitspanne ein vorbestimmtes, möglichst konstantes Halbzellenpotential zusammen mit dem Ableitkontaktelement bestimmen.

In einer bevorzugten Ausführungsform ist vorgesehen, daß wenigstens eine der Referenzelektroden ein in Phasengrenzkontakt mit einem Ableitkontaktelement stehendes, an dem Basisteil gehaltenes Polster umfaßt, welches mit dem Elektrolyt des Hohlraums getränkt ist. In Ausführungsformen dieser Art ist zwischen dem Referenzelektrolyt und dem Vorkonditionierungselektrolyt bzw. während der Analysemessung zwischen dem Referenzelektrolyt und der zu analysierenden Flüssigkeitsprobe keine Membran erforderlich. Als Polster eignet sich beispielsweise ein mit dem Vorkonditionierungselektrolyt getränkter, an dem Ableitkontaktelement anliegender Papierabschnitt. Während vor der Analysemessung der Vorkonditionierungselektrolyt aus dem Bereich der ionenselektiven Meßelektrode entfernt wird, verbleibt das mit dem Elektrolyt getränkte Polster an dem Basisteil. Der Elektrolyt kann im Bereich der Referenzelektrode zur Bildung des Polsters eingedickt sein. Die zu analysierende Flüssigkeit benetzt während der Analysemessung sowohl das mit dem Elektrolyt getränkte Polster bzw. die Gelschicht des eingedickten Elektrolyten als auch die ionenselektive Meßelektrode. Der Vorkonditionierungselektrolyt kann, wie vorstehend erläutert, in einem entnehmbaren Polster enthalten sein, welches in dem Hohlraum an dem Polster der Referenzelektrode anliegt.

Gemäß einer weiteren bevorzugten Ausführungsform wird eine Referenzelektrode, die sich durch einfache und kostengünstige Herstellung bei gleichzeitig hervorragender Stabilität und kurzer Einstellzeit auszeichnet, verwendet.

Diese ist durch die Merkmale des Anspruch 14 gekennzeichnet. Bevorzugt wird eine hohe Konzentration an Kupfersulfat verwendet.

Obwohl zahlreiche Referenzelektrodensysteme bisher beschrieben wurden, wurden in der Praxis im Zusammenhang mit ionenselektiven Elektroden praktisch ausschließlich Referenzelektroden auf der Basis von Silber-Silberchlorid oder Kalomel-Referenzelektroden verwendet. Dabei zeichnet sich die Silber-Silberchlorid-Referenzelektrode dadurch aus, daß bei ihr als Referenzelektrolyt vorteilhaft Kaliumchlorid ( KCl) verwendet werden kann. Die Kalium- und Chloridionen bilden ein sogenanntes äquitransferentes Ionenpaar, wodurch Diffusionspotentiale an der Phasengrenze zur Probe bzw. zum Standard bei der Messung fast vollständig vermieden werden. Dies ist eine seit langem bekannte und vielfach benutzte Eigenschaft von KCl. Soweit andere Referenzelektroden zur Anwendung kommen, werden diese normalerweise über eine sogenannte Salzbrücke, die aus einer konzentrierten KCl-Lösung besteht, mit der Probe verbunden. Dadurch nutzt man auch für Referenzelektrodensysteme, die einen anderen Referenzelektrolyt benutzen, die vorteilhaften Eigenschaften von KCl aus. Diese Konstruktion hat allerdings den Nachteil, daß ein System aus mindestens drei Kammern verwendet werden muß, nämlich aneinander anschließend die Kammer für den Referenzelektrolyt der Referenzelektrode, die Kammer für die Salzbrücke und die Probenkammer mit der daran angeordneten Meßelektrode, die gegebenenfalls noch eine weitere Kammer für den Ableitelektrolyt der Meßelektrode einschließt. Dieser Aufbau läßt sich erheblich vereinfachen, wenn die Salzbrücke entfallen kann, was besonders für nur einmal verwendbare Elektrodenanordnungen von erheblicher Bedeutung ist.

Überraschend wurde nun gefunden, daß sich eine Referenzelektrode ohne Salzbrücke für die Bestimmung von Bestandteilen von Blut, in einfachster Weise aufbauen läßt, wenn man ein System aus Kupfer und Kupfersulfat (Cu-CuSO₄) verwendet. Praktische Versuche haben ergeben, daß sich mit diesem System hervorragend stabile Referenzelektroden aufbauen lassen, die sich gleichzeitig durch sehr kurze Einstellzeiten auszeichnen. Obwohl es sich bei Kupfer und Sulfat nicht um ein äquitransferentes Ionenpaar handelt, konnten überraschenderweise keine störenden Diffusionspotentialunterschiede gegenüber Blut festgestellt werden. Dies ist um so mehr überraschend, als das erfindungsgemäße Referenzelektrodensystem mit einer relativ hohen Konzentration an Kupfersulfat, bevorzugt in der Größenordnung von 1 mol/l arbeitet. Gegenüber Kaliumchlorid hat das Kupfer-Kupfersulfatsystem den zusätzlichen Vorteil, daß es das Meßgut Blut nicht negativ beeinflußt.

Der das Kupfersulfat enthaltende Referenzelektrolyt kann durch geeignete Verfahren, beispielsweise als eingedicktes Gel, in einen Zustand hoher Viskosität gebracht sein. Soweit, was sich in der Praxis bewährt hat, eine flüssige Salzlösung als Referenzelektrolyt eingesetzt wird, ist es zweckmäßig, in dem Bereich der Kontaktstelle zu der Probe eine Elektrolytbrücke vorzusehen, die einerseits die Durchmischung von Probe und Referenzelektrolyt behindert, andererseits für alle Ionenarten durchgängig sein muß. Praktisch bewährt hat sich insbesondere eine Zelluloseacetatmembran mit einer Porenweite von etwa 1 μm. Durch das die Elektrolytbrücke bildende Bauteil, insbesondere die Membran, wird eine abgeschlossene Elektrodenkammer der Referenzelektrode begrenzt, die mit dem flüssigem Referenzelektrolyt gefüllt ist. Je nach den gewünschten maximalen Meßzeiten kommt es nun darauf an, diese Elektrodenkammer so zu gestalten, daß die in Kontakt mit der Elektrolytbrücke gebrachte Probe nicht innerhalb der gewünschten Meßzeit das stabile Halbzellenpotential der Referenzelektrode beeinflussen kann. Dies wird gemäß bevorzugter Ausführungsform dadurch erreicht, daß die Elektrodenkammer einen hinreichend großen Abstand zwischen Elektrolytbrücke und Ableitkontaktelement und/oder einen hinreichend kleinen Querschnitt auf diesem Wege aufweist, so daß in der gewünschten Meßzeit keine Ionen aus der Probe bis zum Ableitkontaktelement gelangen und dadurch das Referenzpotential beeinträchtigen können.

Für die gemäß vorliegender Erfindung gewünschte Ausgestaltung der Elektrodenanordnung als nur einmal verwendbare Wegwerfelektrode ist eine einfache und kostengünstige Herstellung von besonderer Bedeutung. Zu diesem Zweck hat es sich besonders bewährt als Ableitkontaktelement statt beispielsweise eines Kupferdrahtes ein mit Bindemitteln gebundenes Graphit-Kupfer-Gemisch zu verwenden. Eine alternative, ebenfalls besonders leicht herstellbare, Konstruktion sieht vor, daß das Ableitkontaktelement im wesentlichen aus einer, insbesondere durch ein Druckverfahren auf dem Isolierkörper aufgebrachten Graphitbahn besteht, die in dem mit dem Referenzelektrolyt in Kontakt stehenden Bereich mit Kupfer, ebenfalls durch ein Druckverfahren, beschichtet ist.

Das Aufbringen der Kupfer-Graphit-Gemisch bzw. der reinen Graphit-Bahnen auf dem Isolierkörper geschieht gemäß einem für andere Zwecke an sich bekannten Druckverfahren folgendermaßen: Es wird eine Metallplatte mit den entsprechenden Leiterbahnen in einer Tiefe von etwa 20 μm bis 40 μm geätzt. Die dort mit einer sogenannten "Farbrakel" aufgebrachte Schicht aus Kupfer-Graphit-Lack bzw. reinem Graphitlack wird mit Hilfe eines flexiblen Silikonstempels abgenommen und auf den Isolierkörper übertragen. Ein derartiges Verfahren läßt sich mit kurzen Taktzeiten in einem für die Massenproduktion geeigneten Vorgang verwenden.

Bevorzugt wird das gleiche Verfahren auch zur Herstellung der Ableitkontaktelemente der mindestens einen Meßelektrode verwendet, um so mit möglichst wenig Arbeitsgängen die gesamte Elektrodenanordnung herzustellen.

Im folgenden sollen Ausführungsbeispiele der Erfindung anhand von Zeichnungen näher erläutert werden. Es zeigt

| | |
|---|---|
| Fig. 1 | eine perspektivische Darstellung eines Analysegeräts zur Bestimmung der Kalium- und/oder Natriumionenkonzentration einer Körperflüssigkeit, insbebesondere Blut, bei Durchführung einer Eich- bzw. Kalibriermessung; |
| Fig. 2 | das Analysegerät bei Durchführung der Analysemessung; |
| Fig. 3 | einen schematischen Längsschnitt durch eine bei dem Analysegerät nach Fig. 1 verwendbare Elektrodeneinheit im herstellerseitig gefertigten und für die Eich- bzw. Kalibriermessung vorbereiteten Zustand; |
| Fig. 4 | die Elektrodeneinheit vorbereitet für die Analysemessung; |
| Fig. 5 bis 12 | noch weitere Ausführungsformen von herstellerseitig für eine Eich- bzw. Kalibriermessung vorbereiteten Elektrodeneinheiten zur Bestimmung elektrolytischer Bestandteile von Flüssigkeiten, insbesondere |

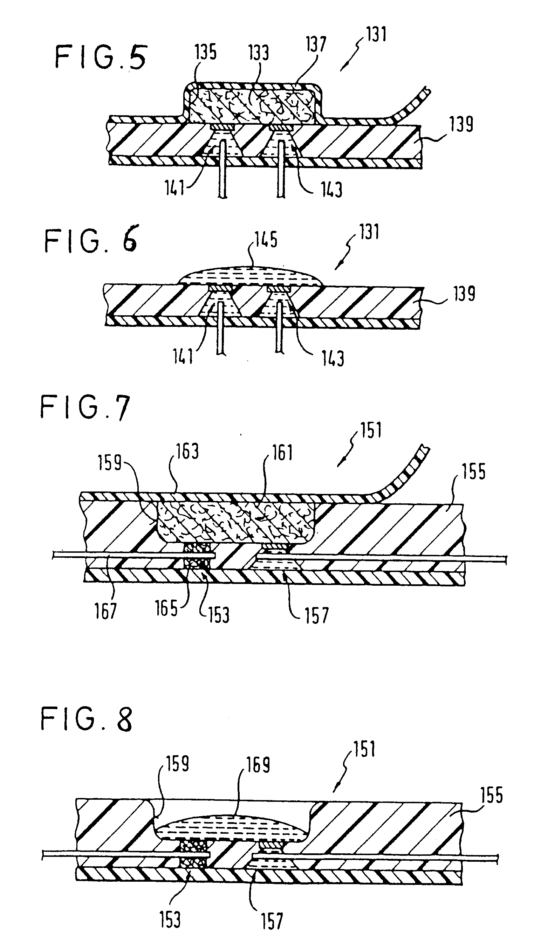

von Blut oder Urin, wobei die Fig. 5, 7 , 9 und 11 die Elektrodeneinheiten im herstellerseitig gefertigten und für die Eich- bzw. Kalibriermessung vorbereiteten Zustand zeigen und in den Fig. 6 , 8 , 10 und 12 die Elektrodeneinheiten während der Analysemessung darstellen.

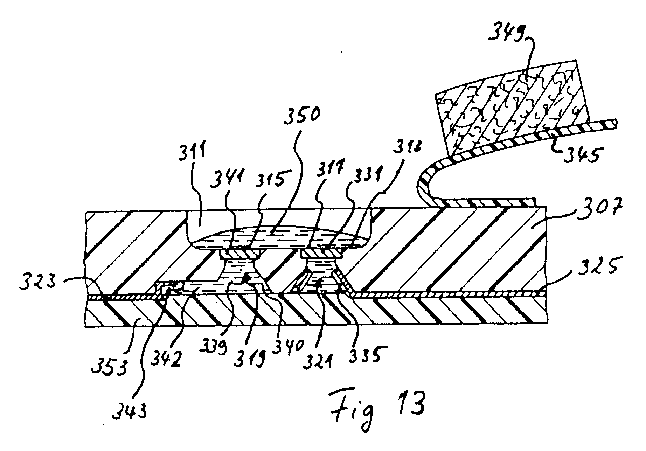

Fig. 13 eine Elektrodeneinheit, bei der das zusätzliche Merkmal des Anspruchs 14 verwirklicht ist, im schematischen Längsschnitt während der Analysemessung.

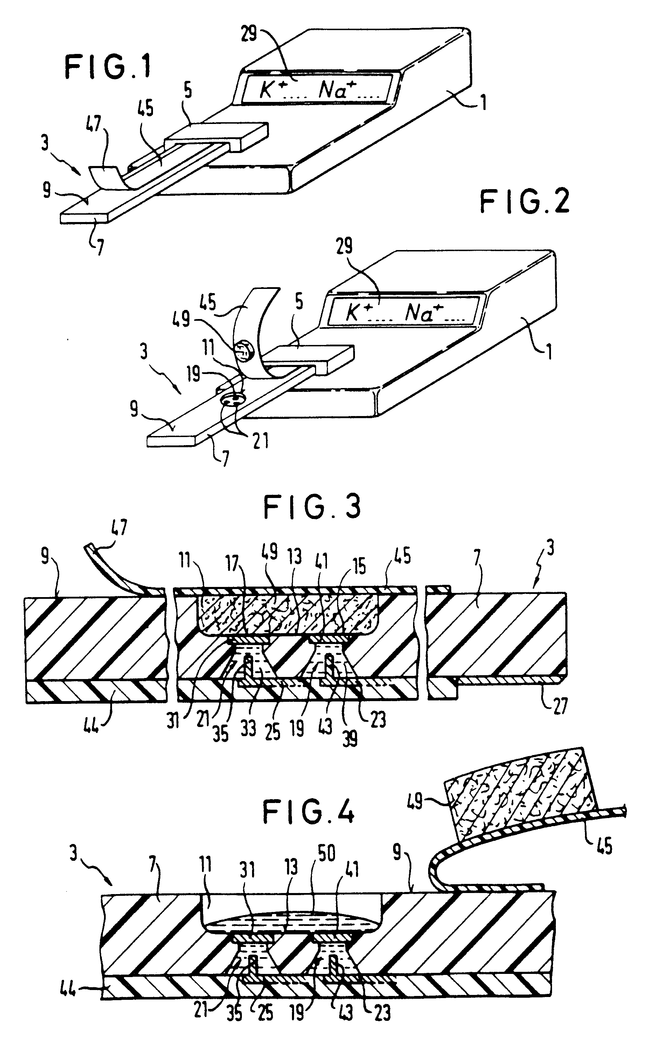

Die Fig. 1 und 2 zeigen ein Analysegerät 1, beispielsweise zur Messung der Kaliumionen und/oder Natriumionenkonzentration von Blut oder Urin. Die Messung erfolgt mit Hilfe einer als Wegwerfteil ausgebildeten Elektrodeneinheit 3, die über eine elektrische Steckverbindung 3 elektrisch und mechanisch mit dem Analysegerät 1 verbunden ist. Die Elektrodeneinheit 3 weist, wie am besten die Fig. 3 und 4 zeigen, ein aus isolierendem Material, z.B. Kunststoff, bestehendes flachstabförmiges Basisteil 7 auf, welches auf seiner betriebsmäßig in die Steckverbindung 5 eingesteckten, nach oben weisenden Flachseite 9 eine Mulde 11 mit einem vorzugsweise ebenen Boden 13 enthält. Mit dem Boden 13 schließen Benetzungsflächen 15 bzw. 17 einer Referenzelektrode 19 und von zwei ionenselektiven Meßelektroden 21 bündig ab. Die Referenzelektrode 19 und die Meßelektroden 21 sind im Abstand voneinander angeordnet. Die Fig. 3 und 4 zeigen der Übersichtlichkeit wegen lediglich eine der Meßelektroden 21. Eine der Meßelektroden 21 ist kaliumionenselektiv, die andere natriumionenselektiv. Bei geeigneter Ausbildung der Meßelektroden können auch Konzentrationen anderer Ionenarten gemessen werden. Die Referenzelektrode 19 und die Meßelektroden 21 sind über elektrische Leitungen 23, 25 mit bei 27 angedeuteten Steckkontakten galvanisch verbunden. Die Steckkontakte 27 stellen über die Steckverbindung 5 die elektrische Verbindung zu einem zwischen der Referenzelektrode 19 einerseits und den Meßelektroden 21 andererseits anzuschließenden, hochohmigen Spannungsmeßgerät her, dessen Spannungswerte in Werte der Kaliumionenkonzentration bzw. Natriumionenkonzentration umgerechnet auf einem Anzeigefeld 29 (Fig. 1 und 2) angezeigt werden.

Jede der beiden Meßelektroden 21 umfaßt im dargestellten Ausführungsbeispiel eine für Kaliumionen bzw. Natriumionen selektive, die Benetzungsfläche 17 bildende Membran 31, die die Mulde 11 gegenüber einer mit einem Ableitelektrolyten gefüllten Elektrolytkammer 33 verschließt. Bei dem Ableitelektrolyt kann es sich um ein Gel aus KCl, NaCl und AgCl handeln. In den Ableitelektrolyt taucht ein mit der Zuleitung 25 verbundenes Ableitkontaktelement 35. Bei dem Ableitkontaktelement kann es sich um einen Silberdraht mit Silberchloridoberflächenschicht handeln, der zusammen mit dem Ableitelektrolyten ein Ag/AgCl-Elektrolytsystem bildet. Der Ableitelektrolyt ist an AgCl gesättigt und enthält zudem die Ionenart, für die die Membran 31 selektiv ist.

Die Referenzelektrode 19 weist eine Elektrolytkammer 39 auf, die mit einem Gel aus KCl, NaCl und AgCl als Referenzelektrolyt gefüllt ist. Eine die Benetzungsfläche 15 bildende, für alle Ionenarten durchlässige Membran 41 verschließt die Elektrolytkammer 39 zur Mulde 11 hin. In die Elektrolytkammer 39 taucht ein mit der Zuleitung 23 verbundenes Ableitkontaktelement 43 ein, welches mit dem Referenzelektrolyt reversibel elektrochemisch reagiert. Bei dem Ableitkontaktelement 43 handelt es sich wiederum um einen Silberdraht mit Silberchloridoberflächenschicht. Die Elektrolytkammern 33 und 39 sind durch eine wasserdampfundurchlässige Schicht 44 verschlossen.

Die Öffnung der Mulde 11 ist im herstellerseitig gelieferten, in Fig. 3 dargestellten Zustand der Elektrodeneinheit 3 durch einen Folienstreifen 45 verschlossen, der an der Fläche 9 des Basisteils 7 angebracht, beispielsweise angeklebt ist und in einem Grifflappen 47 endet, der das Abziehen der Folie 45 erleichtert. In der Mulde 11 ist ein Polster 49 aus einem,zumindest im feuchten Zustand, elastischem und saugfähigem Material, beispielsweise Vlies, angeordnet, welches herstellerseitig mit einer Elektrolytlösung trolytlösung getränkt ist. Weiter sollte das Material hydrophil, quellfähig und mit dem Material des Folienstreifens gut verbindbar sein (insbesondere durch Heißsiegeln). Selbstverständlich darf es in keiner Weise die Elektrolytlösung oder die Elektrodenfunktion beeinträchtigen. Besonders geeignet ist ein Viskoseschwammmaterial, insbesondere ein BaumwolleViskose-Schwammtuch, (vgl. Vieweg/Becker, Kunststoffhandbuch, Bd. III, "Abgewandelte Naturstoffe", Carl Hanser Verlag München (1965, Seite 150 - 158). Die Umfangsform des Polsters 49 entspricht etwa der Umfangsform der Mulde 11 . Die Dicke des Polsters 49 ist so bemessen, daß es bei Einbringen in die Mulde 11 komprimiert wird und elastisch federnd vorgespannt an den Benetzungsflächen 15, 17 der Elektroden 19, 21 anliegt. Die Elektrolytlösung enthält Kaliumionen und Natriumionen in einer vorbestimmten Konzentration und sorgt für eine ständige Vorkonditionierung dieser Elektroden.

Für eine Analysemessung der Kalium- und Natriumionenkonzentrationen wird die herstellerseitig mit einem Vorkonditionierungselektrolyt beschickte Elektrodeneinheit 3, wie in Fig. 1 dargestellt, bei nicht abgenommenem Folienstreifen 45 in die Steckverbindung 5 des Analysegeräts 1 eingesteckt. Das Analysegerät 1 mißt die Kalium- bzw. Natriumionenkonzentrationen des Vorkonditionierungselektrolyt en und wird hierdurch selbsttätig kalibriert.

Sodann wird der Folienstreifen 45 abgezogen. Das an dem Folienstreifen 45 befestigte Polster 49 entspannt sich und saugt eventuelle Reste der Elektrolytlösung vollständig vom Boden 13 der Mulde 11 auf. In die nun freiliegende Mulde 11 wird eine bei 50 angedeutete Probe von beispielsweise 50 μl des zu analysierenden Bluts geträufelt. Das Analysegerät 1 mißt die Kaliumionenkonzentration und Natriumionenkonzentration und zeigt die Meßwerte, die unter Verwendung der zuvor ermittelten Standardwerte berechnet werden, auf dem Anzeigefeld 29 an.

Fig. 5 zeigt eine andere Ausführungsform einer Elektrodeneinheit 131, die sich von der Elektrodeneinheit 3 in Fig. 3 im wesentlichen nur dadurch unterscheidet, daß ihr mit Vorkonditionierungselektrolyt getränktes Polster 133 in einer Mulde 135 eines Folienstreifens 137 untergebracht ist. Der Folienstreifen 137 ist abnehmbar an einem isolierenden Basisteil 139 angebracht, welches wiederum eine Referenzelektrode 141 und wenigstens eine ionenselektive Meßelektrode 143 trägt. Die Elemente 133 bis 143 der Elektrodeneinheit 131 entsprechen der Reihe nach den Elementen 49, 11, 45, 7, 19 und 21 der Elektrodeneinheit 3 in Fig. 3. Zur weiteren Erläuterung ihres Aufbaus, der Wirkungsweise und des Gebrauchs wird auf die Beschreibung der Fig. 1 bis 4 Bezug genommen. Im Unterschied zur Elektrodeneinheit 3 ist jedoch die in Gebrauchsstellung obenliegende Seite des Basisteils 139 flach. Für die Analysemessung wird, wie Fig. 6 zeigt, ein Tropfen 145 des zu analysierenden Eluts auf die flache Oberseite des Basisteils 139 geträufelt, so daß er die nach oben hin freiliegenden Benetzungsflächen der Elektroden 141 und 143 gemeinsam bedeckt.

Die Fig. 7 und 8 zeigen eine Elektrodeneinheit 151, die sich von der Elektrodeneinheit 3 der Fig. 3 und 4 im wesentlichen nur durch die Gestaltung ihrer Referenzelektrode 153 unterscheidet. Die Elektrodeneinheit 151 weist im übrigen wiederum ein isolierendes Basisteil 155 auf, welches neben der Referenzelektrode 153 wenigstens eine ionenselektive Meßelektrode 157 trägt. Die Elektroden 153, 157 sind am Boden einer in Gebrauchsstellung nach oben offenen Mulde in dem Basiskörper vorgesehen. Die Mulde enthält, wie in Fig. 7 dargestellt ist, ein Polster 161, welches an einem die Mulde 159 überdeckenden und dicht abschließenden Folienstreifen 163 angebracht ist. Das Polster 161 ist wiederum herstellerseitig mit einer Vorkonditionierungselektrolyt getränkt. Die Zusammensetzung des Vorkonditionierungselektrolyt ist so gewählt, daß er zugleich den Referenzelektrolyt der Referenzelektrode 153 bildet. Die Referenzelektrode 153 umfaßt einen mit dem Vorkonditionierungselektrolyt/Referenzelektrolyten getränkten Körper 165 , an dem das Polster 161 anliegt. Bei dem getränkten Körper 165 kann es sich beispielsweise um ein Vlies- oder Schwammstück oder einen Papierabschnitt handeln. Geeignet sind aber auch poröse Festkörper oder ein stark eingedicktes Gel. Der Elektrolyt in dem Körper 165 steht in Phasengrenzkontakt mit einem Elektronen leitenden Ableitkontaktelement 167 .

Fig. 7 zeigt die Elektrodeneinheit 151 in der herstellerseitig gefertigten Form, in der auch die Eich- bzw. Kalibriermessung durchgeführt wird. Fig. 8 zeigt die Elektrodeneinheit 151 bei abgenommenem Folienstreifen 163. In die Mulde 159 ist ein Tropfen 169 der zu analysierenden Flüssigkeit eingebracht, der für die Analysemessung in Phasengrenzkontakt mit dem Referenzelektrolyten in dem Körper 165 der Referenzelektrode 153 als auch in Phasengrenzkontakt zu den Meßelektroden 157 steht. Zur weiteren Erläuterung von Einzelheiten des Aufbaus und der Wirkungsweise der Elektrodeneinheit 151 wird auf die Beschreibung der Fig. 1 bis 4 Bezug genommen, wobei die Teile 155 bis 163 der Reihe nach den Teilen 7, 21, 11, 49 und 45 entsprechen.

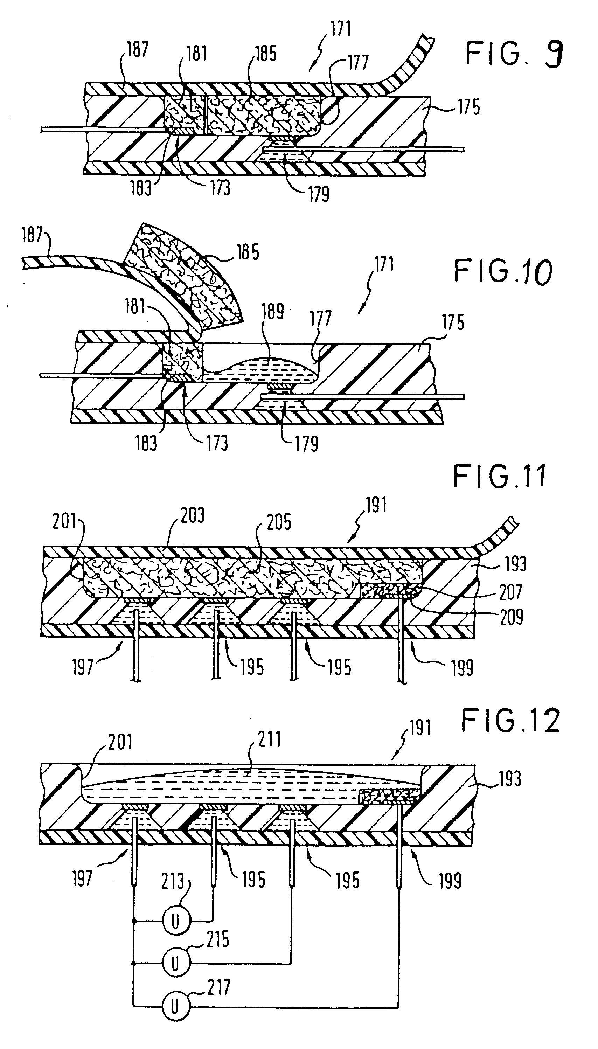

Die Fig. 9 und 10 zeigen eine Elektrodeneinheit 171, die sich von der Elektrodeneinheit 151 der Fig. 7 und 8 im wesentlichen nur dadurch unterscheidet, daß ihre Referenzelektrode 173 nicht in einer gesonderten Kammer eines isolierenden Basisteils 175, sondern in einer in Gebrauchsstellung der Elektrodeneinheit nach oben offenen Mulde 177 untergebracht ist, derart, daß ihre Phasengrenzfläche zu dem Vorkonditionierungselektrolyt bzw. der zu analysierenden Flüssigkeit eine der Hochwände der Mulde 177 bildet. Die Referenzelektrode 173 umfaßt ein in der Mulde 177 befestigtes, mit dem Vorkonditionierungselektrolyt/Referenzelektrolyten getränktes Polster 181, welches in Phasengrenzkontakt mit einem Ableitkontaktelement 183 steht. In der Mulde sitzt ferner ein mit dem Vorkonditionierungselektrolyt/Referenzelektrolyten getränktes weiteres Polster 185, welches sowohl an dem Polster 181 als auch an der Benetzungsfläche der Meßelektrode 179 flächig anliegt. Das Polster 185 ist an einem Folienstreifen 187 befestigt, der die Mulde 177 abdichtet und abnehmbar an dem Basisteil 175 angebracht ist. Die Polster 181 und 185 können in blossem Berührungskontakt miteinander stehen, sie können aber auch über nicht näher dargestellte Trennstege einstückig miteinander verbunden sein, derart, daß die Trennstege beim Öffnen des Folienstreifens 187 abreißen. Fig. 9 zeigt die Elektrodeneinheit 171 im herstellerseitig gelieferten Zustand. In Fig. 10 ist die Elektrodeneinheit 171 während der Analysemessung dargestellt, wobei ein Tropfen 189 der zu analysierenden Flüssigkeit in die Mulde 177 eingebracht ist. Die Teile 173 bis 187 entsprechen der Reihe nach den Teilen 153, 155, 159, 157, 165, 167, 161 und 163 der Elektrodeneinheit 151 der Fig. 11 und 12. Zur weiteren Erläuterung des Aufbaus und der Wirkungsweise wird auf die Beschreibung dieser Figuren sowie auf die Beschreibung der Fig. 1 bis 4 Bezug genommen.

Die Fig. 11 und 12 zeigen eine Elektrodeneinheit 191, die sich von der Elektrodeneinheit 3 der Fig. 3 und 4 im wesentlichen dadurch unterscheidet, daß an einem Basiskörper 193 nicht nur mehrere ionenselektive Meßelektroden 195, sondern auch zwei Referenzelektroden 197 und 199 angebracht sind. Die Elektroden 195, 197 und 199 sind wiederum in einer in Gebrauchsstellung der Elektrodeneinheit 191 nach oben offenen Mulde 201 des Basisteils 193 benetzbar. Die Mulde 201 hat zur Erzielung einer Kapillarwirkung eine langgestreckte Form und ist von einem am Basisteil 193 abnehmbar befestigten Folienstreifen 203 dicht abgedeckt. In der Mulde 201 sitzt vorgespannt ein an dem Folienstreifen 203 befestigtes und zusammen mit dem Folienstreifen 203 abnehmbares Polster 205, welches an sämtlichen Elektroden 195, 197 und 199 gemeinsam anliegt. Das Polster 205 ist herstellerseitig mit einem Vorkonditionierungs elektrolyten getränkt, der die Elektroden vorkonditioniert und eine Eichmessung ermöglicht.

Die ionenselektiven Meßelektroden 195 und die Referenzelektrode 197 haben den anhand der Fig. 3 und 4 für die Elektroden 19 und 21 erläuterten Aufbau. Die Referenzelektrode 199 ist ähnlich der Referenzelektrode 153 in Fig. 7 bzw. der Referenzelektrode 173 in Fig. 9 aufgebaut und weist einen mit dem Vorkonditionierungs/Referenzelektrolyten getränkten Körper 207, beispielsweise einen am Boden der Mulde 201 befestigten Papierabschnitt auf, der mit einem Ableitkontaktelement 209 in Phasengrenzkontakt steht.

Bei abgenommenem Folienstreifen 203 und Polster 205 wird für die Analysemessung ein Tropfen 211 der zu analysierenden Flüssigkeit in die Mulde 201 eingebracht, derart, daß sämtliche Elektroden benetzt werden. Fig. 12 zeigt schematisch ein zwischen der Referenzelektrode 197 und einer der ionenselektiven Meßelektroden angeschlossenes Spannungsmeßgerät 213. Zwischen der anderen, für eine andere Ionensorte selektiven Meßelektrode 195 und der Referenzelektrode 197 ist ein weiteres Spannungsmeßgerät 215 angeschlossen. Die Spannungsmeßgeräte 213, 215, die durch ein gemeinsames, jedoch umschaltbares Meßgerät gebildet sein können, messen die Potentialdifferenzen zwischen den Elektroden 195 und 197. Zwischen den Referenzelektroden 199 und 197 ist ein weiteres Spannungsmeßgerät 217 angeschlossen. Die von diesem Spannungsmeßgerät gemessene Potentialdifferenz liefert einen Kontrollwert für die Korrektur der Meßwerte der Spannungsmeßgeräte 213, 215 .

Die Referenzelektrode 199 kann entsprechend der Referenzelektrode 197 unter Verwendung einer ionenunspezifischen, porösen Membran aufgebaut sein. Alternativ kann die Referenzelektrode 197 analog der Referenzelektrode 199 aufgebaut sein. Die Referenzelektroden 197, 199 sind vorzugsweise auf gegnüberliegenden Seiten der ionenselektiven Meßelektroden 195 angeordnet.

Die Figur 13 zeigt eine weitere bevorzugte Ausführungsform. Die Darstellung entspricht im wesentlichen der Figur 4, so daß auf die Beschreibung zu dieser Figur verwiesen werden kann. Die entsprechenden Bauteile sind mit Ziffern bezeichnet, die gegenüber den in der Figur 4 verwendeten um 300 vermehrt wurden. An dieser Stelle sollen im einzelnen nur noch die Besonderheiten beschrieben werden, in denen sich das in Figur 17 dargestellte Ausführungsbeispiel von dem in Figur 4 dargestellten unterscheidet.

Dies ist in erster Linie die Zusammensetzung des in der Elektrodenkammer 339 befindlichen Referenzelektrolyts und des Ableitkontaktelements. Als Referenzelektrolyt wird eine Kupfersulfatlösung verwendet, die die Elektrodenkammer 339 , welche durch eine für alle Ionenarten durchlässige Membran 341 abgeschlossen ist, praktisch vollständig ausfüllt. Die elektrische Leitung 323 wird durch eine Bahn aus Graphit gebildet, die in dem weiter oben beschriebenen Verfahren auf den Basiskörper 307 aufgedruckt wurde. Das Ableitkontaktelement wird durch eine Kupferschicht 343 gebildet, die die Graphitbahn dergestalt bedeckt, daß der Referenzelektrolyt nur mit dem Kupfer in Kontakt steht.

Weiterhin erkennt man, daß die Elektrodenkammer 339 in einen sich nach unten kegelstumpfförmig erweiternden weiten Bereich 340 und in einen engen Kanal 342 unterteilt ist. Der enge Kanal hat eine so große Länge (in Fig. 13 in der Zeichenebene von rechts nach links) und einen so kleinen Querschnitt, daß in dem in der Figur dargestellten Meßbetriebszustand innerhalb der gewünschten Meßzeit keine Ionen aus der Probe bis zum Bereich des Ableitkontaktelements 343 vordringen und dadurch die Stabilität des Referenzpotentials gefährden können.

Im dargestellten bevorzugten Ausführungsbeispiel ist auch die elektrische Leitung 325 und das Ableitkontaktelement 335 der Meßelektrode 321 analog wie bei der Referenzelektrode 319 aufgebaut. Verwendet man diese Konstruktion zusammen mit einer in der Elektrolytkammer 333 der Meßelektrode 321 befindlichen Kupfersulfatlösung, so ergibt sich insgesamt eine Elektrodenanordnung, die sich mit wenigen Arbeitsgängen herstellen läßt, weil die verwendeten Materialien in beiden Elektroden gleich sind und die außerdem im Kontakt mit einem zur Tränkung des Polsters 349 verwendeten ebenfalls Kupfersulfat in gleicher Konzentration enthaltenden Standardelektrolyt ein System bilden, bei dem auch über lange Lagerzeiten ein Gleichsgewichtszustand in der gesamten Meßanordnung aufrechterhalten bleibt. Wenn diese Elektrodenanordnung mit dem Meßgerät verbunden wird, steht sofort ein Standardpotential an. Nach Aufreißen des Folienstreifes 345 und damit Entfernen des den Standardelektrolyt enthaltenden Polsters 349 kann die Blutprobe 35C aufgegeben werden. Das System stellt sich dann, insbesondere bei Verwendung der Kupfersulfat enthaltenden Elektrolyten in der Referenzelektrode 319 und in der Meßelektrode 321 sehr schnell auf einen stabilen Wert ein, der gemessen und zu gewünschten Analyse verwendet werden kann.

Die in den vorstehenden Ausführungsformen der Elektrodeneinheiten erläuterten ionenselektiven Meßelektroden sind bevorzugt unter Verwendung einer ionenselektiven Membran aufgebaut. Eine geeignete kaliumionenselektive Membran umfaßt gemäß allgemein bekannter Rezepturen folgende Anteile in Gewichtsprozent:

0,1 bis 3%, vorzugsweise 1% Valinomycin

20 bis 50%, vorzugsweise 33% PVC

50 bis 80%, vorzugsweise 66% Sebacinsäure bis (2-äthylhexylester); $C_{26}H_{50}O_4$

Geeignete natriumionenselektive Membrane sind beispielsweise in der Dissertation von H.F. Osswald "Beitrag zur Entwicklung ionenselektiver Durchfluß-Flüssigkeitmembranelektroden für die Bestimmung von Natrium-, Kalium-, Calcium- und Chlorid-Ionen in Vollblut",Diss. ETH 6480, 1979, Eidgenössische Technische Hochschule, Zürich, oder in Medical and Biological Application of Electrochemical Devices; Edited by Jiri Koryta, P.C. Meier et al, Seiten 13 bis 91 beschrieben. Eine geeignete Zusammensetzung ist hierfür in Gewichtsprozent:

0,5 bis 10%, vorzugsweise 5% Ligand ETH 227

50 bis 80%, vorzugsweise 63,2% Sebacinsäure -bis (2-äthylhexylester); $C_{26}H_{50}O_4$

20 bis 50 %, vorzugsweise 31,8 % PVC.

Für den Ableitelektrolyt bei der Bestimmung von Kaliumionen eignetsich beispielsweise folgende Zusammensetzung:

1 bis 1000 mmol/l $CuSO_4$ + 10 mmol/l KCl im Kontakt mit Cu-Draht

oder

5 bis 100 mmol/l NaCl ($H_2O$) + 10 mmol/l KCl (gesättigt an AgCl) im Kontakt mit Ag/AgCl-Draht.

Als Standardlösung eignet sich eine Lösung mit 5 mmol/l KCl oder 145 mmol/l NaCl.

Zur Minderung des Diffusionspotentials ist im Referenzelektrolyt zweckmäßigerweise 1 bis 3 mol/l KCl zugefügt, wenn der Referenzelektrolyt und der Standardelektrolyt verschieden sind. Ist der Referenzelektrolyt und der Standardelektrolyt identisch, so kann die Ionenkonzentration durch Zugabe von Cu $SO_4$ und/oder Mg $Cl_2$ und/oder Lithiumacetat erhöht werden. Die kalium- bzw. natriumionenseiektiven Membrane müssen dann so ausgewählt werden, daß sie auf diese Ionen nicht oder in vorherbestimmbarer Weise ansprechen. Die oben angeführten kaliumionenselektiven Membrane sind z.B. gegen Kupferionen unempfindlich.

Bei den Elektrodeneinheiten 151, 171 und 191 der Fig. 7 bis 12 sitzt das mit dem Standardelektrolyt getränkte Polster in einer Mulde des Basisteils Entsprechend der Elektrodeneinheit 131 der Fig. 5 und 6 kann es alternativ auch in einer Mulde des Verschlußteils untergebracht sein.

## Patentansprüche

1. Nach Art eines Wegwerfteils nur einmal verwendbare Elektrodenanordnung zur elektrochemischen Analyse elektrolytischer Bestandteile einer Flüssigkeit, umfassend

einen Basiskörper (7,85,139,155,175,193,307) aus Isoliermaterial,

wenigstens eine von dem Basiskörper gehaltene für eine zu analysierende Ionenart selektive Meßelektrode (21,111,142,157,179,195,321) ,

ein von dem Basiskörper gehaltenes Ableitkontaktelement (43,115,167,183,209,343) wenigstens einer Referenzelektrode (19,109,141,153,173,197,199,319) und

einen herstellerseitig vorgepackten Elektrolyt, der die mindestens eine zu analysierende Ionenart enthält, so daß er als Kalibrierelektrolyt mit jeder Meßelektrode (21,111,142,157,179,195,321) ein vorbestimmtes Halbzellenpotential definiert,

**dadurch gekennzeichnet**, daß

der Basiskörper ein abnehmbares Verschlußteil (45,105,137,163,187,203,345) trägt, welches zusammen mit dem Basiskörper einen dicht verschlossenen Hohlraum (11,159,177,201,311) bildet, der

a) den vorgepackten Elektrolyt als Vorkonditionierungselektrolyt in Phasengrenzkontakt mit jeder Meßelektrode (21,111,142,157,179,195,321) enthält, wobei der Vordkonditionierungselektrolyt zusätzlich zur Kalibrierung auch zur Vorkonditionierung dient und bei Abnahme des Verschlußteils (45,105,137,163,187,203,345) entnehmbar ist,

b) den Referenzelektrolyt in Phasengrenzkontakt mit dem Ableitkontaktelement (43,115,167,183,209,343) der Referenzelektrode (19,109,141,153,173,197,199,319) enthält,

wobei der Vorkonditionierungslektrolyt und der Referenzelektrolyt die gleichen Ionenarten in der gleichen Aktivität enthalten, aber räumlich durch eine eindeutig definierte Benetzungsfläche (15,17,315,317) separiert sind,

a) die elektrolytischen Kontakt zwischen dem Vorkonditionierungselektrolyt und dem Referenzelektrolyt gewährleistet,

b) an der der Vorkonditionierungselektrolyt vom Referenzelektrolyt zum Zwecke der Entnahme des Vorkonditionierungselektrolyts bei Abnahme des Verschlußteils (45,105,137,163,187,203,345) trennbar ist und

c) die so beschaffen ist, daß sie bei der späteren eigentlichen Messung elektrolytischen Kontakt zwischen der dann in dem Hohlraum (11,159,177,201,311) befindlichen Flüssigkeit und dem Referenzelektrolyt gewährleistet, ohne eine zu Meßfehlern führende Vermischung zuzulassen.

2. Elektrodenanordnung nach Anspruch 1, bei der wenigstens eine der Meßelektroden (21,57,89,111,143,157,179,195,321) einen Ableitelektrolyt, ein Ableitkontaktelement (35,343) und ein an der Benetzungsfläche (17,317) zum Hohlraum (11,52,86,104,135,159,177,201,311) angeordnetes, eine Elektrodenkammer für den Ableitelektrolyt abschließendes für bestimmte Ionenarten selektiv durchgängiges Sperrelement (31,331) einschließt, **dadurch gekennzeichnet**, daß der Ableitelektrolyt zumindest die Ionenart, für die das Sperrelement (31,331) durchgängig ist, in der gleichen Aktivität wie der Vorkonditionierungselektrolyt enthält.

3. Elektrodenanordnung nach einem der vorhergehenden Ansprüche, **dadurch gekennzeichnet**, daß der Hohlraum (11,135,159,177,201,311) ein mit dem Vorkonditionierungselektrolyt getränktes Polster (49,133,161,185,205,349) enthält, welches bei Abnahme des Verschlußteils (45,137,163,187,203,345) entnehmbar ist.

4. Elektrodenanordnung nach Anspruch 3, **dadurch gekennzeichnet**, daß das Polster (49,133,161,185,205,349) aus elastischem, saugfähigem Material besteht und gegen seine Elastizität vorgespannt in dem Hohlraum (11,135,159,177,201,311) eingeschlossen ist.

5. Elektrodenanordnung nach einem der Ansprüche 3 oder 4, **dadurch gekennzeichnet**, daß das Polster aus Viskoseschwammaterial, insbesondere einem Baumwolle-Viskose-Schwammtuch besteht.

6. Elektrodenanordnung nach einem der Ansprüche 3 bis 5, **dadurch gekennzeichnet**, daß das Polster (49,133,161,185,205,349) an dem Verschlußteil (45,345) befestigt ist.

7. Elektrodenanordnung nach einem der vorhergehenden Ansprüche, **dadurch gekennzeichnet**, daß wenigstens eine der Referenzelektroden zum Hohlraum hin von einer ionenunspezifischen Membran (41,341) abgeschlossen ist.

8. Elektrodenanordnung nach einem der vorhergehenden Ansprüche, **dadurch gekennzeichnet**, daß wenigstens eine der Referenzelektroden (153,173,199) ein in elektrolytischem Kontakt mit einem Ableitkontaktelement (167,183,209) stehendes, an dem Basisteil (155,175,193) gehaltenes Polster (165,181,207) umfaßt, welches mit dem Vorkonditionierungselektrolyt des Hohlraums (153,177,201) als Referenzelektroylt getränkt ist.

9. Elektrodenanordnung nach Anspruch 8 in Verbindung mit einem der Ansprüche 3 bis 7, **dadurch gekennzeichnet**, daß das entnehmbare Polster (161,185,205) an dem basisteilfesten Polster (161,181,207) anliegt.

10. Elektrodenanordnung nach einem der vorhergehenden Ansprüche, **dadurch gekennzeichnet**, daß der Hohlraum durch eine Mulde (11,159,177,201,311) in dem Basisteil (7,155,175,193,307) gebildet ist, an deren Boden (13,313) die Benetzungsflächen (15,17,315,317) der Meßelektrode (21,157,179,195,321) und der Referenzelektrode (19,153,197,199,319) vorgesehen sind.

11. Elektrodenanordnung nach einem der vorhergehenden Ansprüche, **dadurch gekennzeichnet**, daß das Verschlußteil durch eine flexible, zumindest die Benetzungsflächen (15,17,315,317) der Elektroden (19,21,141,143,153,157,173,179,195,197,199,3-19,321) gemeinsam überdeckende Folie (45,137,163,187,203,345) gebildet ist.

12. Elektrodenanordnung nach einem der vorhergehenden Ansprüche, **dadurch gekennzeichnet**, daß der Referenzelektrolyt der Referenzelektrode (153,173,199) eingedickt ist.

13. Elektrodenanordnung nach einem der vorhergehenden Ansprüche, **dadurch gekennzeichnet**, daß der Vorkonditionierungselektrolyt eine stark erhöhte Viskosität hat.

14. Elektrodenanordnung nach einem der vorhergehenden Ansprüche, **dadurch gekennzeichnet** das das Ableitkontaktelement (343) der Referenzelektrode Kupfer enthält, der Referenzelektrolyt Kupfersulfat enthält und der Referenzelektrolyt direkt -ohne eine zwischengeschaltete, zusätzliche Elektrolytkammer- in Phasengrenzkontakt mit der Probe bringbar ist.

15. Elektrodenanordnung nach Anspruch 14, **dadurch gekennzeichnet**, daß die Konzentration des Kupfersulfats in dem Referenzelektrolyt in der Größenordnung von 1 mol/l liegt.

16. Elektrodenanordnung nach einem der Ansprüche 14 oder 15, **dadurch gekennzeichnet**, daß das Ableitkontaktelement (343) ein mit Bindemittel gebundenes Graphit-Kupfer-Gemisch einschließt.

17. Elektrodenanordnung nach einem der Ansprüche 14 bis 16, **dadurch gekennzeichnet**, daß das Ableitkontaktelement (343) eine Graphitbahn einschließt, die in dem mit dem Referenzelektrolyt in Kontakt stehenden Bereich mit Kupfer beschichtet ist.

## Claims

1. Electrode arrangement, usable only once in the manner of a disposable part, for the electrochemical analysis of electrolytic components of a liquid, comprising a base body (7,85,139,155,175,193,307) of insulating material, at least one measurement electrode (21,111,142,157,179,195,321), selective for type of ion to be analysed, held by the base body, a lead-off contact element (43,115,167,183,209,343), held by the base body, of at least one reference electrode (19,109, 141,153,173,197,199,319) and an electrolyte, prepacked by the manufacturer, which contains at least one type of ion to be analysed so that, as calibration electrolyte, it defines with each measurement electrode (21,111,142,157,179,195,321) a predetermined half-cell potential, characterised in that the base body carries a removable closure part (45,105,137,163,187,203,345) which, together with the base body, forms a tightly closed hollow chamber (11,159,177,201,311) which
a) contains the prepacked electrolyte as preconditioning electrolyte in phase boundary contact with each measurement electrode (21,111,142,157,179,195,321), whereby the preconditioning electrolyte, additionally to the calibration, also serves for the preconditioning and, in the case of removal of the closure part (45,105,137,163,187,203,345), is removable,
b) contains the reference electrolyte in phase boundary contact with the lead-off contact element (43,115,167, 183,209,343) of the reference electrode (19,109,141, 153,173,197,199,319),
whereby the preconditioning electrolyte and the reference electrolyte contain the same ion type in the same activity but are spatially separated by a clearly defined wetting surface (15,17,315,317) and
a) ensures the electrolytic contact between the preconditioning electrolyte and the reference electrolyte,
b) on which the preconditioning electrolyte is separable from the reference electrolyte for the purpose of the removal of the preconditioning electrolyte in the case of removal of the closure part (45,105,137,163,187,203,345) and
c) is so characterised that, in the case of the later actual measurement, it ensures electrolytic contact between the liquid then present in the hollow chamber (11,159,177,201,311) and the reference electrolyte without allowing a mixing leading to measurement errors.

2. Electrode arrangement according to claim 1 in which at least one of the measurement electrodes (21,57,89, 111,143,157,179,195,321) includes a lead-off electrolyte, a lead-off contact element (35,343) and a stop element (31,331), selectively permeable for particular ion types, arranged on the wetting surface (17,317) to the hollow chamber (11,52,86,104,135,159,177,201,311), closing off an electrode chamber for the lead-off electrolyte, characterised in that the lead-off electrolyte contains at least the ion type for which the stop element (31,331) is permeable in the same activity as the preconditioning electrolyte.

3. Electrode arrangement according to one of the preceding claims, characterised in that the hollow chamber (11,135,159,177,201,311) contains a pad (49,133, 161,185,205,349), impregnated with the preconditioning electrolyte, which, in the case of removal of the closure part (45,137,163,187,203,345), is removable.

4. Electrode arrangement according to claim 3, characterised in that the pad (49,133,161,185,205,349) consists of elastic absorbent material and, prestressed against its elasticity, is enclosed in the hollow chamber (11,135,159,177,201,311).

5. Electrode arrangement according to one of claims 3 or 4, characterised in that the pad consists of viscose sponge material, especially a cotton viscose sponge cloth.

6. Electrode arrangement according to one of claims 3 to 5, characterised in that the pad (49,133,161,185, 205,349) is fixed to the closure part (45,345).

7. Electrode arrangement according to one of the preceding claims, characterised in that at least one of the reference electrodes is closed off towards the hollow chamber by an ion-nonspecific membrane (41,341).

8. Electrode arrangement according to one of the preceding claims, characterised in that at least one of the reference electrodes (153,173,199) includes a pad (165,181,207), standing in electrolytic contact with the lead-off contact element (167,183,209), held on the base part (155,175,193), which is impregnated with the preconditioning electrolyte of the hollow chamber (153, 177,201) as reference electrolyte.

9. Electrode arrangement according to claim 8 in combination with one of claims 3 to 7, characterised in that the removable pad (161,185,205) lies against the pad (161,181,207) fixed on the base part.

10. Electrode arrangement according to one of the preceding claims, characterised in that the hollow chamber is formed by a trough (11,159,177,201,311) in the base part (7,155,175,193,307) on the bottom (13,313) of which are provided the wetting surfaces (15,17,315, 317) of the measurement electrode (21,157,179,195,321) and of the reference electrode (19,153,197,199,319).

11. Electrode arrangement according to one of the preceding claims, characterised in that the closure part is formed by a flexible foil (45,137,163,187,203,345) commonly covering over at least the wetting surfaces (15,17,315,317) of the electrodes (19,21,141,143,153, 157,173,179,195,197,199,319,321).

12. Electrode arrangement according to one of the preceding claims, characterised in that the reference electrolyte of the reference electrode (153,173,199) is thickened.

13. Electrode arrangement according to one of the preceding claims, characterised in that the preconditioning electrolyte has a greatly increased viscosity.

14. Electrode arrangement according to one of the preceding claims, characterised in that the lead-off contact element (343) of the reference electrode contains copper, the reference electrolyte contains copper sulphate and the reference electrolyte can be brought directly into phase boundary contact with the sample without an interposed additional electrolyte chamber.

15. Electrode arrangement according to claim 14, characterised in that the concentration of the copper sulphate in the reference electrolyte lies in the order of magnitude of 1 mol/l.

16. Electrode arrangement according to one of claims 14 or 15, characterised in that the lead-off contact element (343) includes a graphite-copper mixture bound with a binding agent.

17. Electrode arrangement according to one of claims 14 to 16, characterised in that the lead-off contact element (343) includes a graphite strip which is coated with copper in the region standing in contact with the reference electrolyte.

**Revendications**

1. Dispositif d'électrodes à usage unique, jetable, destiné à l'analyse électrochimique de composants électrolytiques d'un liquide, comprenant

un corps de base (7, 85, 139, 155, 175, 193, 307) en matériau isolant,

au moins une électrode de mesure (21, 111, 142, 157, 179, 195, 321) sélective pour un type d'ion à analyser, maintenue par le corps de base,

un élément de contact de dérivation (43, 115, 167, 183, 209, 343) maintenu par le corps de base, au moins d'une électrode de référence (19, 109, 141, 153, 173, 197, 199, 319) et

un électrolyte préalablement emballé par le fabricant, qui contient au moins l'un des types d'ion à analyser, de sorte que comme électrolyte d'étalonnage, il définit un potentiel de demi-cellule prédéterminé avec chaque électrode de mesure (21, 111, 142, 157, 179, 195, 321),

caractérisé en ce que

le corps de base porte une pièce d'obturation (45, 105, 137, 163, 187, 203, 345) amovible, qui forme, conjointement avec le corps de base, un volume vide (11, 159, 177, 201, 311) fermé hermétiquement, qui

   a) contient l'électrolyte préablement emballé comme électrolyte de préconditionnement, en contract de limite de phases avec chaque électrode de mesure (21, 111, 142, 157, 179, 195, 321), l'électrolyte de préconditionnement assurant en outre le calibrage pour le préconditionnement, et pouvant être retiré lors de l'enlèvement de la pièce d'obturation (45, 105, 137, 163, 187, 203, 345),

   b) contient l'électrolyte de référence en contact de limite de phases avec l'élément de contact de dérivation (43, 115, 167, 183, 209, 343) de l'électrode de référence (19, 109, 141, 153, 173, 197, 199, 319),

l'électrolyte de préconditionnement et l'électrolyte de référence contenant, les mêmes types d'ions ayant des activités équivalentes, mais en étant séparés entre eux par une surface d'imprégnation (15, 17, 315, 317) définie de manière univoque, qui

   a) assure le contact électrolytique entre l'électrolyte de préconditionnement et l'électrolyte de référence,

   b) permet, lors de l'enlèvement de la pièce d'obturation (45, 105, 137, 163, 187, 203, 345) pour retirer l'électrolyte de réconditionnement, la séparation de l'électrolyte de preconditionnement et de l'électrolyte de référence, et

   c) est conçue de telle façon que, lors de la mesure proprement dite ultérieure, elle assure le contact électrolytique entre le liquide se trouvant dans le volume vide (11, 159, 177, 201, 311) et l'électrolyte de référence, sans laisser se produire une mixion conduisant à une erreur de mesure.

2. Dispositif d'électrodes selon la revendication 1, dans lequel au moins l'une des électrodes de mesure (21, 57, 89, 111, 143, 157, 179, 195, 321) comprend un électrolyte de dérivation, un élément de contact de dérivation (35, 343) et un élément de protection (31, 331) associé à la surface d'imprégnation (17, 317) pour le volume vide (11, 52, 86, 104, 135, 159, 177, 201, 311), fermant une chambre d'électrodes pour l'électrolyte de dérivation, perméable sélectivement pour des types d'ions définis, caractérisé en ce que l'électrolyte de dérivation contient au moins le type d'ion qui peut traverser l'élément de protection (31, 331), avec la même activité que l'électrolyte de préconditionnement.

3. Dispositif d'électrodes selon l'une quelconque des revendications précédentes, caractérisé en ce que le volume vide (11, 135, 159, 177, 201, 311) contient un coussinet (49, 133, 161, 185, 205, 349) imprégné de l'électrolyte de préconditionnement, qui peut être sorti lors de l'enlèvement de la pièce d'obturation (45, 137, 163, 187, 203, 345).

4. Dispositif d'électrodes selon la revendication 3, caractérisé en ce que le coussinet (49, 133, 161, 185, 205, 349) est constitué d'un matériau élastique, absorbant et se trouve, préalablement comprimé, dans le volume vide (11, 135, 159, 177, 201, 311).

5. Dispositif d'électrodes selon la revendication 3 ou 4, caractérisé en ce que le coussinet est constitué d'un matériau en éponge de viscose, en particulier un tissu éponge en coton-viscose.

6. Dispositif d'électrodes selon l'une des revendications 3 à 5, caractérisé en ce que le coussinet (49, 133, 161, 185, 205, 349) est fixé sur la pièce d'obturation (45, 345).

7. Dispositif d'électrodes selon l'une quelconque des revendications précédentes, caractérisé en ce qu'au moins l'une des électrodes de référence est séparée du volume vide par une membrane (41, 341) non spécifique à un ion.

8. Dispositif d'électrodes selon l'une quelconque des revendications précédentes, caractérisé en ce qu'au moins l'une des électrodes de référence (153, 173, 199) comprend un coussinet (165, 181, 207) en contact électrolytique avec un élément de contact de dérivation (167, 183, 209), fixé sur la partie de base (155, 175, 193), qui est imprégné avec l'électrolyte de préconditionnement du volume vide (153, 177, 201), en tant qu'électrolyte de référence.

9. Dispositif d'électrodes selon la revendication 8, en connexion avec l'une des revendications 3 à 7, caractérisé en ce que le coussinet (161, 185, 205) démontable repose sur le coussinet (161, 181, 207) fixé sur la partie de base.

10. Dispositif d'électrodes selon l'une quelconque des revendications précédentes, caractérisé en ce que le volume vide est formé dans la partie de base (7, 155, 175, 193, 307) au moyen d'une cavité (11, 159, 177, 201, 311) sur le fond (13,313) de laquelle sont prévues les surfaces d'imprégnation (15, 17, 315, 317) de l'électrode de mesure (21, 157, 179, 195, 321) et de l'électrode de référence (19, 153, 197, 199, 319).

11. Dispositif d'électrodes selon l'une quelconque des revendications précédentes, caractérisé en ce que la pièce d'obturation est constitué d'une feuille (45, 137, 163, 187, 203, 345) souple, recouvrant au moins conjointement les surfaces d'imprégnation (15, 17, 315, 317) des électrodes (19, 21, 141, 143, 153, 157, 173, 179, 195, 197, 199, 319, 321).

12. Dispositif d'électrodes selon l'une quelconque des revendications précédentes, caractérisé en ce que l'électrolyte de référence de l'électrode de référence (153, 173, 199) est épaissi.

13. Dispositif d'électrodes selon l'une quelconque des revendications précédentes, caractérisé en ce que l'électrolyte de préconditionnement présente une viscosité fortement élevée.

14. Dispositif d'électrodes selon l'une quelconque des revendications précédentes, caractérisé en ce que l'élément de contact de dérivation (343) de l'électrode de référence comprend du cuivre, l'électrolyte de référence comprend du sulfate de cuivre et l'électrolyte de référence peut être mis en contact direct de limite de phases avec l'échantillon, sans une cellule électrolytique intermédiaire supplémentaire.

15. Dispositif d'électrodes selon la revendication 14, caractérisé en ce que la concentration du sulfate de cuivre dans l'électrolyte de référence est de l'ordre de grandeur de 1 mole/litre.

16. Dispositif d'électrodes selon la revendication 14 ou 15, caractérisé en ce que l'élément de contact de dérivation (343) comprend un mélange graphite-cuivre lié par un liant.

17. Dispositif d'électrodes selon l'une des revendications 14 à 16, caractérisé en ce que l'élément de contact de dérivation (343) comprend une bande de graphite qui est revêtue de cuivre dans la zone qui est en contact avec l'électrolyte de référence.

FIG.1

FIG.2

FIG.3

FIG.4

FIG.5

FIG. 6

FIG.7

FIG. 8

FIG. 9

FIG. 10

FIG. 11

FIG. 12

Fig 13